# EUROPEAN PATENT APPLICATION

(11) **EP 0 814 617 A2**
(43) Date of publication of application: **29.12.1997**
(21) Application number: 97110133.2
(22) Date of filing: 20.06.1997
(51) Int. Cl.: H04N 9/04

(54) **Solid-state color imaging device**

(30) Priority: 20.06.1996 JP 159828/96
(71) Applicant: NEC CORPORATION, Tokyo (JP)
(72) Inventor: Tanaka, Takanori, Minato-ku, Tokyo (JP)
(74) Representative: Baronetzky, Klaus, Dipl.-Ing.

(57) **Abstract**

Improving the signal processing configuration which has been complicated because the signal processes are achieved by the television camera, there is implemented in a simplified configuration a small-sized, light-weight, and low-priced color image input device without using video capture means. The device produces a high-resolution image with a low power consumption and a reduced noise. The color image input device includes a two-dimensional solid-state imaging device including a combination of color filter arrays including color filters repeatedly arranged with a predetermined repetitious period in the horizontal and vertical directions for producing a multiplex signal including a luminance signal and a plurality of color signals as modulation components representing color information. The device further includes an analog-to-digital (A/D) converter to convert into a multiplex digital signal the multiplex signal thus obtained by combining the luminance signal with color signal components as modulation components corresponding to the color filter arrays, an interface circuit for transmitting the multiplex digital signal, and an image signal processor for separating color image signals of three primary colors from the multiplex digital signal received from the interface circuit via a bidirectional input/output (I/O) port. Particularly, the image signal processor softwarewise achieves the signal processes.

## Description

### BACKGROUND OF THE INVENTION

The present invention relates to a color image input device, and in particular, to a small-sized, light-weight color image input device which has a simplified configuration to process signals and a high resolution and which conducts the signal processing with a low power consumption.

### Description of the Prior Art

In the conventional method of acquiring color images as digitalized information in a personal computer and/or a workstation, there are employed in combination such a television camera as a home video camera and video capture means for digitalizing video signals and obtaining signals thus digitalized.

Color television signals produced by shooting an object by a television camera are analog video signals and hence cannot be directly inputted to a personal computer or the like which is configured to process digital signals. This leads to necessity of the video capture means which transforms the analog video signals into digital signals to be accepted by the personal computer. Receiving analog color television signals from the television camera, the video capture means separates the television signal into a luminance signal and a plurality of color signals and then converts the resultant signals into digital information by one or more analog-to-digital converter (to be abbreviated as A/D converter herebelow) to supply the information to the personal computer or the like.

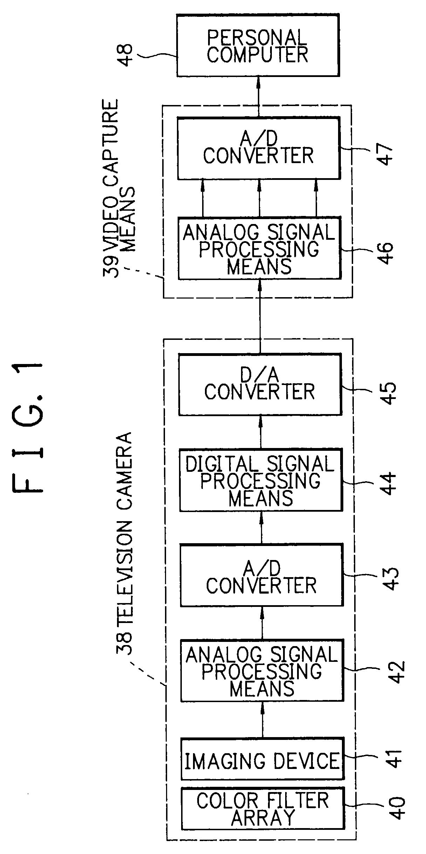

Fig. 1 schematically shows an example of the conventional image input method. In the configuration of Fig. 1, a color television signal produced from a television camera 38 is fed to video capture means 39 for receiving a color image in the form of digital information.

In the television camera 38, a signal outputted from an imaging device 41 including a color filter array 40 is delivered to analog signal processing means 42 to undergo therein such operations as an amplification adjustment and a nonlinear processing to be fed to an A/D converter 43. The signal is then transformed by the converter 43 into a digital signal to be fed to digital signal processing means 44. Namely, the signal is separated into a plurality of color signals and a luminance signal to be subjected to video signal processes including a band limitation and a gamma correction to be resultantly transformed into a digital color television signal. This signal is then supplied to a digital-to-analog converter 45 (to be abbreviated as D/A converter herebelow) to be therethrough converted into an analog color television signal. An example of the construction of the television camera 38 has been described, for example, in an article" Digital Signal Processing System for Video Camera" written in pages 1060 to 1066 of the IEEE Transactions on Acoustics, Speech and Signal Processing, Vol. 45, No. 9 (Institute of Television Engineers of Japan).

Subsequently, to obtain the color image via the television camera 38 so as to record the image in the form of digital information, the analog color television signal from the D/A converter 45 is delivered to video capture means 39. In this means, the input signal is separated by analog signal processing means 46 into a luminance signal and a plurality of color signals to be fed to an A/D converter 47. In the converter, the signals are transformed into a digital signals. The digital signal is then inputted as color image information to an image signal processor 48.

In other words, since the television camera produces analog video signals to be supplied to an ordinary television set, a video tape recorder (VTR), or the like, there is additionally required a signal process to transform the analog video signal into a digital signal which can be processed by a personal computer or the like.

The conventional method above is attended with a first problem that the signal processing configuration of the means for imaging a color image is complicated and hence the system is increased in its size, power consumption, and price.

More specifically, a color television camera is adopted as color imaging means in the prior art such that the color television camera 38 produces, as described by referring to Fig. 1, the color television signal according to the signal outputted from the imaging device 41. In consequence, the output signal from the imaging device 41 is once transformed into a digital signal by the A/D converter 43 to undergo a video signal process in the digital signal processing means 44 so as to be resultantly converted into a digitalized color television signal. However, it is usually necessary that the television camera produces an analog video signal to be accepted by an ordinary television set and/or a video tape recorder. Namely, the digital signal is required to be again transformed by the D/A converter 45 into an analog video signal. This results in provision of analog and digital signal processing means and hence the system structure is accordingly complicated.

A second problem of the prior technology is the complex configuration of the means for acquiring the color image in the form of digital information for the following reasons.

In the conventional technology, a color television camera is adopted as color imaging means, namely, the color television camera generates, as described above, an analog video signal to be inputted to an ordinary television set and/or a video tape recorder. There is required the video capture means to digitalize the analog signal for the processing thereof. In the video capture means, there is required before the A/D converter 47 the analog signal processing means 46 to separate the luminance and color signals from the color television signal as described in relation to Fig. 1. The video capture means resultantly becomes complicated in its configuration.

A third problem of the prior art is that the noise of the acquired color image adversely acts upon the picture and the resolution of the image is lowered, which accordingly deteriorates the picture quality as follows.

As described in conjunction with Fig. 1, the signal created from the imaging device 41 of the color television camera of the conventional technology is processed as follows. Namely, in order for the the digital signal processing means 44 to obtain therefrom a digital color television signal through a digital signal processing, the output signal from the imaging device 41 is processed through the analog signal processing means 42 and the A/D converter 43. Additionally, the signal thus outputted from the digital signal processing means 44 is transformed by the D/A converter 44 into an analog color television signal. Next, in order for the A/D converter 47 of the video capture means 39 to obtain a digital signal, there is required the analog signal processing means 46. Since the original signal is subjected to several signal processes, noise components thereof are emphasized in the respective signal processes. In addition, the necessity of the output of the analog video signal to be supplied to the ordinary television set and/or the video tape recorder leads to provision of the D/A converter 45. Therefore, the video capture means 39 is required to include the D/A converter 47 to transform the video signal again into a digital signal. In other words, the D/A and A/D conversions for the connection of the analog color television signal are desirably to be dispensed with. Furthermore, in the connection of the analog color television signal, the conversion clock pulses for use in the A/D and D/A conversions on the side of the television camera have a period or cycle and a phase associated with pixels of the imaging device 41, whereas the clock pulses used for the A/D conversion in the video capture means 39 have a cycle and a phase which are necessary for the image to be obtained. That is, the cycle and phase vary there between and hence the resolution of the image is deteriorated.

### SUMMARY OF THE INVENTION

It is therefore an object of the present invention to provide a low-price color image input device having a small size, a reduced weight, and a high resolution and operating with a minimized power consumption and a reduced noise, the input device receiving digitalized image signals via a bidirectional input/output port of a personal computer, a workstation, or the like. Moreover, in the input device, the signal process conventionally accomplished by the television camera of the prior is implemented by software to simplify the configuration for achieving the signal process without necessitating the video capture means.

In accordance with the present invention, there is provided a color imaging device including a two-dimensional solid-state imaging device including a combination of color filter arrays including color filters repeatedly arranged with a predetermined repetitious period in the horizontal and vertical directions for producing a multiplex signal including a luminance signal and a plurality of color signals as modulation components representing color information. The device further includes an analog-to-digital (A/D) converter to convert into a multiplex digital signal the multiplex signal thus obtained by combining the luminance signal with color signal components as modulation components corresponding to the color filter arrays, an interface circuit for transmitting the multiplex digital signal, and an image signal processor for separating and generating color image signals of three primary colors from the multiplex digital signal received from the interface circuit via a bidirectional input/output (I/O) port. The image signal processor includes means for sequentially acquiring the multiplex digital signal from the bidirectional I/O port at timing synchronized with a driving operation of the imaging device, means for separating a luminance signal component and a plurality of modulation components from the multiple digital signal sequentially acquired, combining the luminance signal component with the plural modulation components into color signals of three primary colors and thereby producing a two-dimensional color image signal, white balance control means for adjusting a white balance according to a magnitude of the color image signal, sensitivity control means for adjusting an opto-electric conversion time of the imaging device and a magnitude a signal supplied to the A/D converter according to the magnitude of the color image signal, and means for transmitting a control signal for the sensitivity control from the bidirectional I/O port to the interface circuit. Moreover, the image signal processor may include means for controlling alteration of an imaging angle or an imaging resolution of the image. This is softwarewise accomplished, for example, by a CPU of a computer.

The interface circuit includes a function of transmitting the multiplex digital signal to the image signal processing means and for receiving the control signal for the sensibility adjustment and the control signal for the controlling of variation in the imaging angle or resolution of the image. Furthermore, the interface circuit includes temporary storage means for arbitrating a transmission speed difference with respect to the bidirectional I/O port and/or varying the imaging angle or resolution of the image. In the configuration, the temporary storage means conducts the storing and reading operations of the output signals obtained from the two-dimensional solid-state imaging device as follows. In the vertical direction thereof, a predetermined number of scan lines existing in the first portion beginning at the first scan line are assumed to be ineffective; moreover, in the horizontal direction, a predetermined number of pixels existing in the ending portion and being relative to the last pixel are regarded ineffective. Namely, a predetermined number of pixels excepting the ineffective pixels in the horizontally and vertically peripheral portions are assumed to be effective so as to vary the imaging angle of the image, thereby changing the number of image frames per unitary time. On the other hand, in the vertical direction, effective pixels are obtained with an interval of a predetermined number of scan lines; furthermore, in the horizontal direction, effective pixels are attained with an interval of a predetermined number of pixels so as to alter the resolution of image, thereby changing the the number of image frames per unitary time.

In the color image device configured as above, the image signal processor can softwarewise achieve the respective signal processes by a central processing unit (CPU). specifically, by a personal computer or the like. In accordance with the configuration, since the signal processes of the conventional technology are accomplished by the software of the image signal processor, the analog signal processing means and the digital signal processing means required in the conventional color television camera or the like are unnecessary and the configuration is simplified. Consequently, there can be implemented a small-sized, low-price, and light-weight color image input device operating with a reduced power consumption. Furthermore, the video capture means of the prior art can be dispensed with, and the digital signal transformed by the A/D converter using the clock pulses associated with the respective pixels of the color imaging device is subjected to the signal process. Resultantly the deterioration of resolution appearing in the conventional technology is suppressed and hence high-resolution images can be attained at a low price.

### BRIEF DESCRIPTION OF THE DRAWINGS

The objects and features of the present invention will become more apparent from the consideration of the following detailed description taken in conjunction with the accompanying drawings in which:
Fig. 1 is a schematic block diagram showing a method of acquiring and recording a color image in the form of digital information in accordance with the prior art;
Fig. 2 is a block diagram illustratively showing an embodiment of the color image input device in accordance with the present invention;
Fig. 3 is a block diagram concretely showing an embodiment of the color image input device in accordance with the present invention;
Fig. 4 is a diagram schematically showing a color filter array of the embodiment;
Fig. 5 is a flowchart for explaining operation of signal processing means of the embodiment of Fig. 3;
Fig. 6 is a diagram for explaining operation using a method of increasing the operation speed, i.e., the number of frames per unitary time by reducing the imaging angle of the image in the embodiment.
Fig. 7 is a diagram for explaining operation using a method of increasing the operation speed, i.e., the number of frames per unitary time by lowering the resolution in the embodiment.

### DESCRIPTION OF THE PREFERRED EMBODIMENTS

Referring now to the drawings, description will be given in detail of an embodiment in accordance with the present invention. Fig. 1 shows the configuration of an embodiment of the present invention.

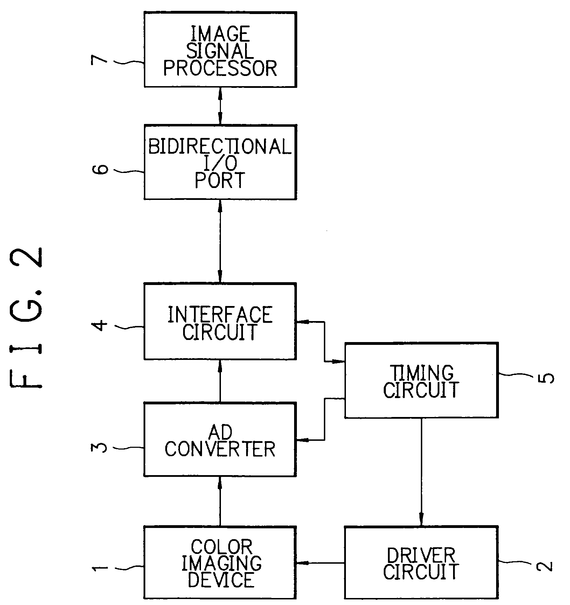

As shown in Fig. 2, when shooting an image of an object, a driver circuit 2 drives a two-dimensional (2D) color imaging device 1 including a combination of color filter arrays each including an array of color filters repeatedly arranged with a predetermined period in the horizontal and vertical directions. The imaging device 1 receives an incident light beam corresponding to the object. In the device, the light beam is transformed through the color filter arrays into a multiplexed image signal in which a plurality of signals indicating color information are mixed as modulation components with a signal representing luminance information. The resultant signal from the imaging device 1 is then fed to an A/D converter 3. The converter 3 transforms the image output signal into a digital signal using a clock pulse having a cycle or period and a phase associated with each pixel. As above, the digitalized image signal is a digital signal corresponding to the amplitude of the image output signal in which a plurality of signals indicating color information are mixed as modulation components with a signal representing luminance information. Next, the digitalized image signal is sent to an interface circuit 4 together with a synchronizing (sync) signal corresponding to the driving operation of the color imaging device 1, the interface circuit 4 inputting and outputting signals.

The interface circuit 4 controls a timing circuit 5, which accordingly generates horizontal and vertical clock pulses to drive the imaging device 1 as well as a sync signal corresponding thereto. Moreover, the timing circuit 5 controls the A/D converter 3 and interface circuit 4 and generates clock pulses to drive these devices.

Subsequently, the digitalized image signal is supplied to an image signal processor 7 including a bidirectional input/output (I/O) port 6 connected via the interface circuit 4 to the timing circuit 5 and A/D converter 3. At timing synchronized with a sync signal supplied from the interface circuit 4 to the I/O port 6, the image signal processor 6 sequentially acquires the digitalized image signal of each pixel from the color imaging device 1. Thereafter, the processor 7 separates a signal designating luminance information and a plurality of signals representing color information from the acquired signal and then combines these signals into a color image signal of three primary colors. Additionally, the processor 7 accomplishes a white balance control operation by adjusting magnitude of each of the obtained color image signals of three primary colors.

Furthermore, to regulate the magnitude of the acquired digital image signal according to a predetermined value, the image signal processor 7 generates signals for the control of the accumulation time for the opto-electric conversion of the imaging device 1 and the adjustment of amplitude of the output signal supplied from the imaging device 1 to the A/D converter 3 and then transmits these two kinds of control signals from the I/O port 6 via the interface circuit 4 to the timing circuit 5. According to these control signals, the timing circuit 5 regulates the driving pulse to drive the imaging device 1 to resultantly control the accumulation time for the opto-electric conversion and adjusts the amplitude of the output signal delivered from the imaging device 1 to the A/D converter 3 for the sensitivity adjustment.

In the embodiment above, the image signal processor 7 softwarewise accomplishes the respective signal processes by a central processing unit (CPU), specifically, a personal computer or the like.

### Embodiment 1

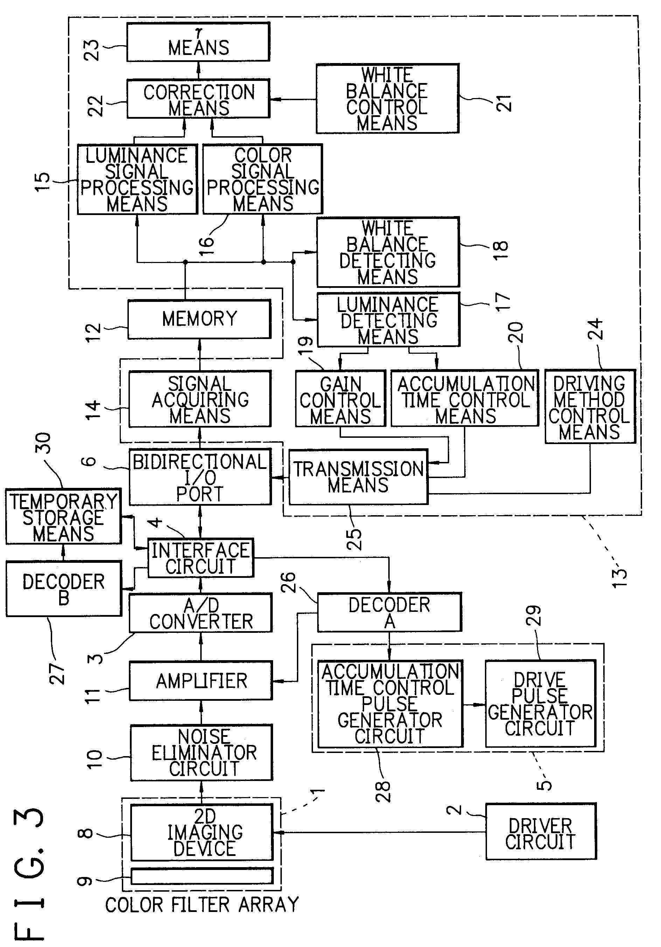

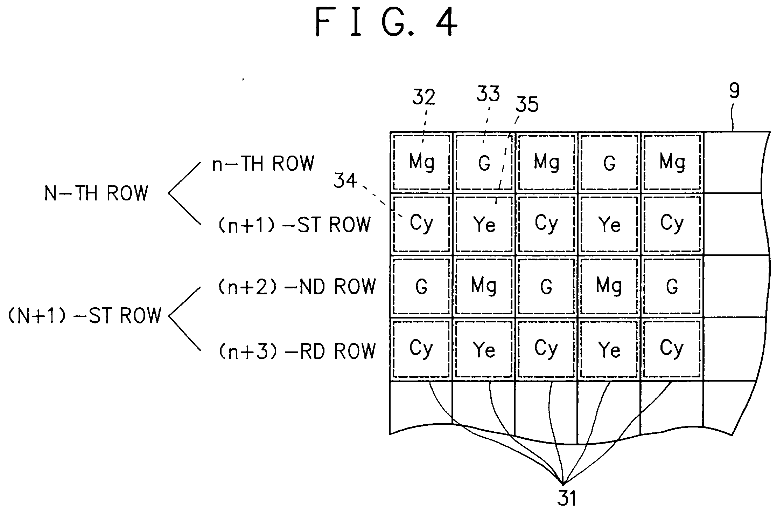

Subsequently, description will be given in detail of a first embodiment of the color image input device of the present invention by referring to the drawings. Figs. 3 and 4 show configurations of the first embodiment and Fig. 4 is a flowchart of operation carried out by signal processing means in the embodiment of Fig. 3.

Referring now to Fig. 3, a color imaging device 1 includes a 2D solid-state imaging device 8 including a combination of color filter arrays 9. Each array 9 includes color filters repeatedly arranged therein with a predetermined period in the horizontal and vertical directions. Receiving an incident light beam associated with an object, the imaging device 1 produces a multiplex image signal in which a plurality of signals indicating color information are combined with a signal denoting luminance information. For the output signal created from the imaging device 1, there is executed a signal process to remove noises therefrom by a noise eliminator circuit 10. The signal process is, for example, a correlational double sampling described in page 49 of "Fundamentals and Applications of Charge Coupled Devices CCD and BBD" published in 1978. Thereafter, the amplitude of the signal is adjusted to a predetermined value by an amplifier 11 to be fed to an A/D converter 3. The converter 3 transforms the signal into a digital signal using a clock pulse having a period and a phase corresponding to each pixel of the imaging device 1 and then sends the resultant signal to an interface circuit 4, which is provided to input/output signals.

The circuit 4 feeds the digitalized image signal to an image signal processing device. The image signal processor includes a bidirectional I/O port 6 connected to the interface circuit 4 for receiving the digital image signal and returning control signals to drive the imaging device 1 and to adjust the sensibility thereof, a memory 12 for storing therein the acquired digital image signal, and signal processing means 13 for accomplishing a process of the acquired signal and a process of the drive control, adjustment regulation, etc. of the imaging device 1. In this embodiment, the image signal processor specifically includes a personal computer. In the system of Fig. 3, the bidirectional I/O port 6 is a data I/O port of the personal computer, for example, an I/O port for a printer may be adopted for the bidirectional I/O port 6. When there exists mismatching in the speed of acquiring data for the I/O port, the interface circuit 4 may include temporary storage means for arbitrating the mismatching state. Furthermore, the memory 12 is a memory of the personal computer and the signal processing means 13 enclosed with dotted lines is implemented by software means.

Referring next to Figs. 3 to 5, description will be given of operation of the signal processing means 13 shown in Fig. 3.

In the configuration of Fig. 3, the interface circuit 4 sends the vertical and horizontal sync signals, all or a portion of clock signals for each pixel, and a digital image signal to the I/O port 6. Signal acquiring means 14 first accomplishes an operation to detect the sync signals (step P1). When the sync signal is detected, the means 14 sends a control signal to regulating an amplification factor of the amplifier 11 to adjust the amplitude of the signal outputted from the imaging device, a control signal to supervise the accumulation time of opto-electric conversion of the imaging device 1, and an image control signal to alter the magnitude of image angle or resolution of the image via the I/O port 6 and interface circuit 4 to decoders A 26 and B 27 (step P2). The control signals will be described in detail later.

Acquiring the digital image signal from the I/O port 6 (step P3), the acquiring means 14 stores the signal in the memory 12 (step P4). The signal processing means 13 then separates color signal components and a luminance signal component from the digital image signal stored in the memory 12 to produces therefrom signals of three primary colors. In association with the creation of the luminance signal and signals of three primary colors, luminance detecting means 17 decides magnitude of the luminance signal. Based on the magnitude, gain control means 19 produces a control signal to supervise the amplification factor of the amplifier for the adjustment of the amplitude of the output signal supplied from the imaging device 1 to the A/D converter 3; moreover, accumulation time control means 20 generates a control signal to regulate the accumulation time of opto-electric conversion of the imaging device. The sensitivity is resultantly adjusted in association with the control operations of the amplification and accumulation time of opto-electric conversion. Similarly, white balance detecting means 18 detects a which balance related to the signals of three primary colors (step P5).

As above, the digitized image signal stored in the memory 12 is a digital signal corresponding to the amplitude of the multiplex image output signal in which the plural signals designating color information are mixed with the signal indicating luminance information. Fig. 4 schematically shows an example of the layout of the color filter array 9 employed in the 2D imaging device 8. In the imaging device 8 shown in the layout of the filter array 9 of Fig. 4, a magenta (Mg) filter 32 and a green (G) filter 33 are alternately disposed in the n-th row of the light receiving element 31, a cyan (Cy) filter 34 and a yellow (Ye) filter 35 are alternately disposed in the (n+1)-st row thereof, a magenta (Mg) filter 32 and a green (G) filter 33 are alternately disposed in the (n+2)-nd row thereof in a phase opposite to that of the n-th row, and a cyan (Cy) filter 34 and a yellow (Ye) filter 35 are alternately disposed in the (n+3)-rd row thereof in a phase identical to that of the (n+1) -st row. The imaging device 8 is driven such that signal charge of the n-th light receiving element and that of the (n+1)-st light receiving element vertically adjacent thereto are added to each other by a vertical transfer register to produce an image signal of the N-th row. Similarly, the addition of signal charge is carried out for the (n+2)-nd and (n+3)-rd light receiving elements by a vertical transfer register to obtain an image signal of the (N+1)-st row. Resultantly, image signals are outputted in the order of (Mg + Cy), (G + Ye), etc. from the N-th row and (G + Cy), (Mg + Ye), etc. from the (N+1)-st row.

As described above, the digitized image signal stored in the memory 12 is a digital signal obtained by digitizing the image signal produced from the imaging device 8. In the circuit construction of Fig. 3, the digital image stored in the memory 12 is processed by luminance signal processing means 15. Namely, for the N-th row, there is obtained a mean value of (Mg + Cy) and (G + Ye); moreover, for the (N+1)-st row, a mean value is attained for (G + Cy) and (Mg + Ye) so as to generate wide band luminance signals of the N-th and (N+1) -st rows, respectively. Additionally, according to the obtained luminance signals, there are produced horizontal and vertical contour signals, and the like.

On the other hand, the digital image in the memory 12 is also processed by color signal processing means 16. That is, there is attained a difference between (Mg + Cy) and (G + Ye) for the N-th to produce a color difference signal B - Y; furthermore, a difference between (G + Cy) and (Mg + Ye) for the (N+1)-st row to create a color difference signal R - Y. Moreover, there is obtained a mean value of ((Mg + Cy), (G + Ye), (G + Cy), and (Mg + Ye) to produce a low band luminance signal. Conducting additions and subtractions between the color difference signals B - Y and R - Y and the luminance signal according to an appropriate magnitude of each of the signals, there are separately attained signals R, G, and B of three primary colors. When separating the color signals, there appears a false color signal because the repetitive period of the color filters in the color filter array 9 is less than that of the light receiving elements of the imaging device 8. The false signal is suppressed to thereby retain the picture quality (step P6).

Next, the white balance detected by white balance detecting means 18 is then corrected by white balance control means 21 (step P7). Namely, the white balance control means 21 controls by the correction means 22 the signals of three primary colors obtained from the color signal processing means 16 so as to optimally restore the colors for the image. In addition, the correction means 22 add the horizontal and vertical contour signals to the corrected primary color signals to thereby correct the resolution (step P8).

Subsequently, a gamma correction is effected for the signal by gamma means (step P9) to attain image signals of three primary colors. The obtained color signals are arranged in a predetermined order in the horizontal and vertical direction to produce a two-dimensional color image (step P10).

As described. for example, in pages 1060 to 1066 of the "Digital Signal Processing System for Video Camera", IEEE Transactions on Acoustics, Speech and Signal Processing, Institute of Television Engineers of Japan, Vol. 45, No. 9, there has been known a method of implementing the signal processes associated with the method of separation and creation of the luminance signal and three primary color signals, resolution correction, gamma correction, and sensitivity control. However, in accordance with the present invention, the signal processes are accomplished completely through software signal processes.

After step P10, when an acquired screen image is a still picture of only one screen, the acquiring operation is terminated. On the other hand, when a mobile picture is acquired, namely, images are to be sequentially received, control is returned to step P1 (step P11) for the acquisition of the next image.

In Fig. 3, the interface circuit 4 includes temporary storage means 30 which has a function to arbitrate the transmission speed difference between the interface circuit 4 and the bidirectional I/O port 6. Moreover, the storage means 30 is means which operates under control of image control means 24 to alter the image angle and resolution of the objective image. The control means 24 supervises the storage means 30 such that the system utilizes only the central portion of the pixels of the imaging device 1 excepting the horizontal and vertical peripheral portions thereof to thereby alter the image or imaging angle of the objective image or the system thins out the pixels in the horizontal and vertical directions so as to vary the resolution of the objective image. With this provision, the image angle and resolution of the image can be changed and the number of effective pixels of the image is decreased. Therefore, it is possible to reduce the period of time required to deliver the digital image signal from the interface circuit 4 via the I/O port 6 and signal acquiring means 14 to the memory 12. Furthermore, in the signal processing means 13, the period of time to conduct such signal processes as the acquisition of the color image, the white balance correction, and the sensitivity control can be reduced, which consequently increases the frame processing speed, i.e., the number of frames of images processed per unitary time.

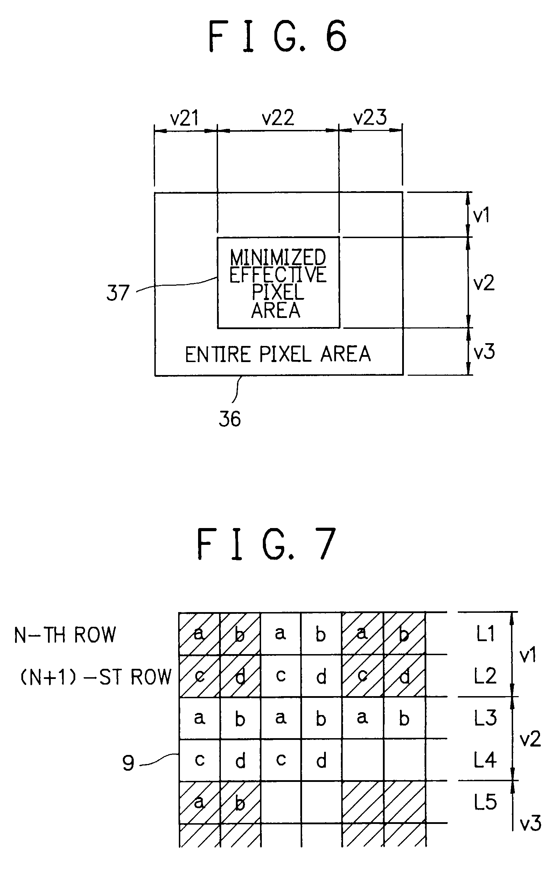

Fig. 6 shows a control method for use with the image control means 24 of altering the image angle of the objective image by using only the predetermined central portion of the pixels of the imaging device 1 excepting the horizontal and vertical peripheral portions thereof. In the diagram, the overall area of all pixels of the imaging device 1 is indicated by a solid line 36. Digital signals of the entire pixel area 36 attained from the A/D converter 3 are written in the temporary storage means 30. When the imaging operation is carried out entirely using the effective pixels in a usual case, the digital signals of the entire pixel area 36 are read from the temporary storage means 30 to be sent to the I/O port 6. On the other hand, when the image angle of the objective image is desired to be varied, an area which is indicated by a dot-and-dash line 37 in the overall pixel area 36 and in which a reduced number of pixels are stored is to be employed as the effective pixel area. For this purpose, the system suppresses use of the scan lines in an area denoted by symbols v1 and v3 in the vertical direction and the area associated with symbol v2 and designated by symbols v21 and v23 in the horizontal direction. Namely, without using these areas, the system reads the digital signals from the storage means 30 to be sent to the I/O port 6.

Fig. 7 shows a control method of similarly alter the resolution of the objective image by the image control means 24 in which the pixels are horizontally and vertically thinned out. As described above, since the color filter array 9 of the imaging device 1 includes color filters repeatedly arranged with predetermined periods in the horizontal and vertical directions, the signal process is conducted using the output signals corresponding to all of the color filters in ordinary cases. However, to alter the resolution, the image control means 24 utilizes the pixels indicated by shadowed zones or areas. Namely, the digital signals of the overall pixel area 36 written in the storage means 30 are accessed as follows. In the vertical direction, the output signals from the N-th and (N+1)-st (L1 and L2, L5 and L6, etc.) are assumed to be effective in association with the repetition of color filters. Horizontally, the signals are thinned out to obtain two consecutive signals as effective signals according to the filter repetition as shown in Fig. 7. The effective signals are then sent to the I/O port 6. In this connection, letters a to d respectively correspond to Mg + Cy, G + Ye, G + Cy, and Mg + Ye.

Incidentally, although the change in the image angle of the image of Fig. 6 and the variation in resolution of the image of Fig. 7 are accomplished when the digital signals of the overall pixel area 36 are read from the storage means 30, these operations may also be similarly achieved when the signals are read from the storage means 30.

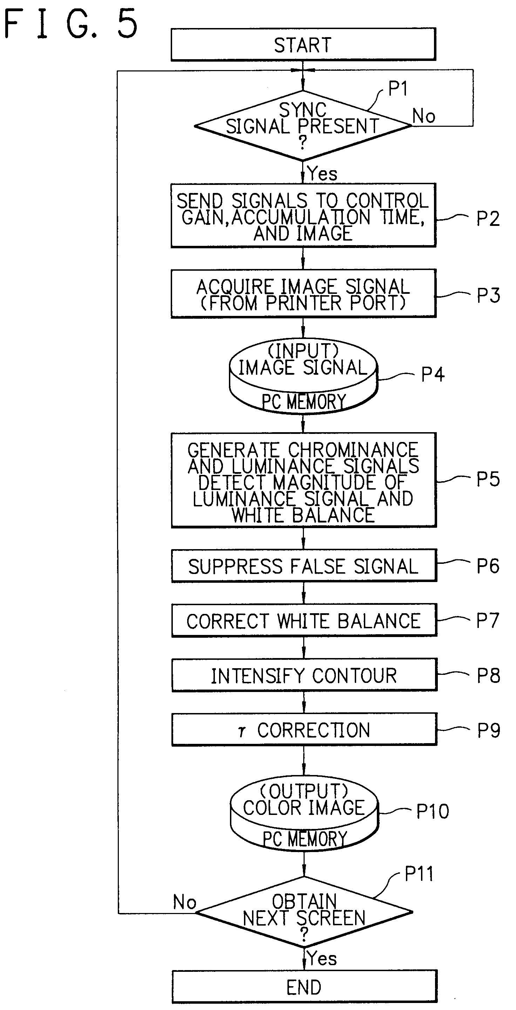

Subsequently, referring to Fig. 3, transmission means 25 sends control signals generated from gain control means 19, accumulation time control means 20, and image control means 24 via the bidirectional I/O port 6 and the interface circuit 4 to the decoders A 26 and B 27. The transmission of these control signals are carried out in step P2 of the flowchart shown in Fig. 5.

Receiving a control signal to control the amplification factor from the gain control means 19, the decoder A 26 regulates the amplification factor of the amplifier 11. Moreover, on receiving a control signal to supervise the accumulation time of opto-electric conversion of the imaging device 1 from the accumulation time control means 20, the decoder A 26 controls an accumulation time control pulse generator 28 of the timing circuit 5. The pulse generating circuit 28 accordingly produces an accumulation time control pulse for the opto-electric conversion of the imaging device 1. The created pulse is supplied to the driver circuit 2 together with a drive pulse generated from a drive pulse generator 29 to drive the imaging device 1. Using the drive pulse and the accumulation time control pulse, the drive circuit 2 operates the imaging device 1.

Similarly, on receiving an image control signal from image control means 24, the decoder B 27 regulates accordingly the storage means 30 to change the magnitude of image angle and resolution of the image.

The description has been given of an example of the color filter array in which four colors of Mg, G, Cy, and Ye are arranged in a mosaic layout. However, as can be seen from the detailed description, the signal processes conventionally achieved by hardware are carried out by software in accordance with the present invention and hence the color filter layout is not restricted by the example above. Namely, the present invention may be similarly applicable to the color filter layout in which the green (G), red (R), and blue (B) filters or the white (W), magenta (Mg), yellow (Ye), and cyan (Cy) filters are arranged in a checkered or striped pattern.

In accordance with the color image input device of the present invention, the image signal processes of color and luminance signals and control operations such as the gain control and the control of accumulation time for opto-electric conversion of the color imaging device are carried out by software of the image signal processor. Consequently, the analog and digital signal processing means included in the conventional color television camera is unnecessary and the configuration of the system becomes simplified. As a result, there is implemented a small-sized, low-weight, and low-priced color image input device operating with a low power consumption.

In addition, when compared with the prior art, the number of signal processes is reduced in accordance with the present invention. Therefore, the deterioration or emphasis of noises is suppressed in the respective signal processes; moreover, the image signals can be inputted via the bidirectional I/O terminal of the image signal processor, the video capture means employed in the conventional technology can be dispensed with. Resultantly, the digital signal transformed by the A/D converter according to a clock pulse corresponding to each pixel of the color imaging device can be directly processed and hence the deterioration appearing in the prior art can be suppressed and there is attained a high-resolution image with a reduced noise. In addition, the video capture means required in the conventional system is unnecessary and hence the production cost of the image input device can be lowered.

While the present invention has been described with reference to the particular illustrative embodiments, it is not to be restricted by those embodiments but only by the appended claims. It is to be appreciated that those skilled in the art can change or modify the embodiments without departing from the scope and spirit of the present invention.

## Claims

1. A color image input device comprising:
a two-dimensional solid-state imaging device including a combination of color filter arrays including color filters repeatedly arranged with a predetermined repetitious period in the horizontal and vertical directions for producing a multiplex signal including a luminance signal and a plurality of color signals as modulation components representing color information;
an analog-to-digital (A/D) converter to convert into a multiplex digital signal the multiplex signal thus obtained by combining the luminance signal with color signal components as modulation components corresponding to the color filter arrays;
an interface circuit for transmitting the multiplex digital signal; and
image signal processing means for separating and generating color image signals of three primary colors from the multiplex digital signal received from the interface circuit via a bidirectional input/output (I/O) port.

2. A color image input device in accordance with claim 1, wherein the image signal processing means includes:
means for sequentially acquiring the multiplex digital signal from the bidirectional I/O port at timing synchronized with a driving operation of the imaging device;
means for separating a luminance signal component and a plurality of modulation components from the multiple digital signal sequentially acquired and combining the luminance signal component with the plural modulation components into color signals of three primary colors, thereby producing a two-dimensional color image signal;
white balance control means for adjusting a white balance according to a magnitude of the color image signal;
sensitivity control means for adjusting an opto-electric conversion time of the imaging device and a magnitude a signal supplied to the A/D converter according to the magnitude of the color image signal; and
means for transmitting a control signal for the sensitivity control from the bidirectional I/O port to the interface circuit.

3. A color image input device in accordance with claim 1, wherein the image signal processing means includes means for controlling alteration of an imaging angle or an imaging resolution of the image.

4. A color image input device in accordance with claim 3, wherein:
the interface circuit transmits the multiplex digital signal to the image signal processing means: and
the interface circuit includes means for receiving the control signal for the sensibility adjustment and the control signal for the controlling of variation in the imaging angle or resolution of the image.

5. A color image input device in accordance with claim 3, wherein the interface circuit includes temporary storage means for arbitrating a transmission speed difference with respect to the bidirectional I/O port.

6. A color image input device in accordance with claim 4, wherein the interface circuit includes temporary storage means for varying the imaging angle or resolution of the image.

7. A color image input device in accordance with claim 6, wherein the temporary storage means includes a function to conduct a write or read operation of the output signal from the imaging device therein or therefrom for a change in the imaging angle or resolution of the image.

8. A color image input device in accordance with claim 1, wherein the bidirectional I/O port is a data I/O port of a computer.

9. A color image input device in accordance with claim 1, wherein the image signal processing means includes software comprising the steps of:
detecting a synchronizing signal transmitted from the interface circuit to the bidirectional I/O port;
transmitting via the bidirectional I/O port and the interface circuit to a decoder three kinds of control signals including a control signal for controlling an amplification factor of an amplifier for adjusting an amplitude of the signals outputted from the imaging device, a control signal for controlling an accumulation time of opto-electric conversion of the imaging device, and an image control signal for varying the image angle or resolution of the image;
acquiring the multiplex digital signal from the bidirectional I/O port and storing the signal in a memory;
separating and generating color signals of three primary colors from the multiplex digital signal stored in the memory, detecting a magnitude of the luminance signal, adjusting the sensitivity, and detecting a white balance;
suppressing a false color signal appearing in the separation of the color signals;
controlling, according to the detected white balance, the color signals of three primary colors by white balance control means and thereby correcting the white balance;
correcting resolution of the color signals of three primary colors undergone the white balance correction; and
conducting a gamma correction for the corrected signals and thereby obtaining an image signal of three primary colors.
